Europäisches Patentamt

European Patent Office

Office européen des brevets

(19)

(11) Veröffentlichungsnummer : **0 100 342**
**B1**

(12) **EUROPÄISCHE PATENTSCHRIFT**

(45) Veröffentlichungstag der Patentschrift :
06.05.87

(21) Anmeldenummer : 83900636.8

(22) Anmeldetag : 28.01.83

(86) Internationale Anmeldenummer :
PCT/EP 83/00045

(87) Internationale Veröffentlichungsnummer :
WO/8302544 (04.08.83 Gazette 83/18)

(51) Int. Cl.⁴ : **A 01 M   7/00**

(54) AUFHÄNGUNG EINES VERTEILGERÄTES AN EINEM LANDWIRTSCHAFTLICHEN FAHRZEUG MIT EINEM SPRITZROHR.

(30) Priorität : 01.02.82 DE 3203210
08.07.82 DE 3225601

(43) Veröffentlichungstag der Anmeldung :
15.02.84 Patentblatt 84/07

(45) Bekanntmachung des Hinweises auf die Patenterteilung : 06.05.87 Patentblatt 87/19

(84) Benannte Vertragsstaaten :
BE DE FR GB NL

(56) Entgegenhaltungen :
DE-A- 1 607 387
DE-B- 2 656 279
DE-C-   829 070
FR-A- 2 280 307
FR-A- 2 289 116

(73) Patentinhaber : **Multinorm B.V.**
**Hoofdweg 1278 P.O. Box 1**
**NL-2150 AA Nieuw-Vennep (NL)**

(72) Erfinder : **ALLAEYS, Pierre C.C.**
**Provenseweg 50**
**B-8970 Poperinge (BE)**

(74) Vertreter : **Strohschänk, Heinz, Dipl.-Ing. et al**
**Patentanwälte Strohschänk, Uri & Strasser Innere Wiener Strasse 8**
**D-8000 München 80 (DE)**

EP 0 100 342 B1

**Beschreibung**

Die Erfindung bezieht sich auf eine Aufhängung eines Verteilgerätes mit einem langgestreckten Spritzrohr am Fahrgestell eines landwirtschaftlichen Fahrzeuges gemäß der Gattung des Patentanspruchs 1.

Das Verspritzen flüssiger oder fester Stoffe über dem Erdreich, z. B. zum Düngen, kann umso schneller durchgeführt werden, je länger das quer zur Fahrtrichtung beiderseits des landwirtschaftlichen Fahrzeuges dicht über dem Erdreich herausragende Spritzrohr gemacht werden kann. Indessen sind der Länge solcher Spritzrohre durch die Bedingung Grenzen gesetzt, daß das Spritzrohr zur Sicherung einer gleichmäßigen Verteilung des Spritzgutes über seinen ganzen Längenbereich in einem möglichst gleichmäßigen Abstand über dem Erdreich geführt werden soll. Da für das Fahrzeug auf einem Acker keine genaue ebene Fahrbahn zur Verfügung steht, lassen sich Schwankungen des Fahrzeuges quer zu seiner Fahrtrichtung, die bei einer starren Befestigung des in geringer Höhe über dem Erdreich geführten Spritzrohres am Fahrzeug schon bei kleinen Schwankungen zu einem Anstoßen der äußeren Spritzrohrenden am Erdreich führen müßten, nicht vermeiden.

Es sind deshalb schon seit längerer Zeit pendelnde Aufhängungen des Verteilgerätes bekannt (z. B. DE-C-1 181 485), die zwar bei gleichbleibenden einseitigen Fahrrinnen und sonst horizontalem Erdreich brauchbar sind, aber beim Überfahren unregelmäßiger Bodenwellen und entsprechend wechselnden seitlichen Schwankungen des Fahrzeuges zu gefährlichen Pendelschwingungen des Verteilgerätes in seiner lotrechten Längsebene führen. Zwar lassen sich diese Verteilgeräte beispielsweise durch Mittel zur seitlichen Verlagerung ihres Schwerpunktes (DE-C-20 33 773) in einfacher Weise so verbessern, daß sie auch an einem entlang einem Hang fahrenden Farzeug eingesetzt werden können, neigen natürlich aber auch dort zu den nachteiligen Pendelschwingungen, die auch durch federnde Dämpfungsmittel (DD-C-91 743 und DE-A-26 56 279) wegen der den geforderten Ausschwenkungen entgegenwirkenden Rückstellkräfte nur unzureichend gedämpft werden können.

Damit das Verteilgerät auch entlang einem Hang ohne die Gefahr von Pendelschwingungen eingesetzt werden kann, ist es gemäß der DE-A-16 07 387 bekanntgeworden, die jeweilige Winkelstellung des um eine obere Längsachse des Fahrzeuges schwenkbaren Verteilgerätes gegenüber der Horizontalen unter Ausschaltung jeglicher selbsttätigen Pendelbewegung zwangsläufig festzulegen. Man ist diesem Vorschlag aber nicht weiter nachgegangen, weil es mühsam und in der Praxis unmöglich ist, die im Gelände unvermeidlichen Neigungsänderungen eines Hanges und zusätzlichen Unebenheiten des befahrenen Bodens während der Fahrbewegung des Verteilgerätes rechtzeitig durch ein ständiges Verändern der vorgenannten Winkelstellung auszugleichen.

Durch die DE-A-2 547 584 (entsprechend der FR-A-2 289 116) sind auch der Gattung des Patentanspruchs 1 entsprechende bifilare Aufhängungen des Verteilgerätes über zwei von den beiden Enden eines Querträgers od. dgl. Gestells der Fahrzeugs in der Grundstellung spiegelbildlich schräg nach unten verlaufende gleich lange Anlenkstangen, Seile od. dgl. Zugglieder bekanntgeworden, die keine Pendelschwingungen des Verteilgerätes um eine Pendelachse mehr zulassen und wobei das Verteilgerät auch so aufgehängt werden kann, daß es an einem entlang einem Hang fahrenden Fahrzeug annähernd parallel zum Erdreich verläuft. Nachteilig ist aber trotzdem geblieben, daß beim seitlichen Ausschwenken des Fahrzeuges über die aufgrund der Schwerkraft und Trägheit des Verteilgerätes entsprechend mitausschwenkenden Zugglieder Reaktionsmomente auf das Verteilgerät ausgeübt werden, die weiterhin zu unerwünschten Schaukelschwingungen des Verteilgerätes aus seiner jeweils angestrebten Lage führen. Außerdem kann diese bifilare Aufhängung des Verteilgerätes über die Zugglieder auch nicht verhindern, daß das Verteilgerät am Hang doch um einen mit zunehmender Ausschwenkung des Fahrgestells zunehmenden Winkelbetrag mitausgeschwenkt und somit das Spritzgut ebenfalls nicht ausreichend gleichmäßig verteilt wird.

Der Erfindung liegt die Aufgabe zugrunde, die letztgenannte bekannte Aufhängung des Verteilgerätes so zu vervollkommen, daß seitliche Ausschwenkungen des das Verteilgerät führenden Fahrzeuges möglichst ohne jegliche nachteiligen Schaukelreaktionen auf das richtig parallel über dem Erdreich ausgerichtete Verteilgerät bleiben.

Die gestellte Aufgabe ist erfindungsgemäß, ausgehend von dem im Gattungsbegriff des Hauptanspruchs angeführten Stand der Technik durch die in dessen kennzeichnendem Teil wiedergegebene Lehre gelöst.

Eine so ausgebildete Aufhängung des Verteilgerätes schließt nicht nur kreisbogenförmige Pendelschwingungen des Verteilgerätes selbst aus, sondern sie weist überhaupt keine pendelartig ausschwenkenden Anlenkstangen, Seile od. dgl. Aufhängungsglieder mehr auf. Es kann sich also die Massenträgheit des Verteilgerätes bei seitlichen Ausschwenkungen des Fahrzeuges gegenüber dem Verteilgerät unbeeinträchtigt von jeglichen Reaktionskräften auswirken, wie sie bei um einen Aufhängungspunkt schwenkbaren und jeweils selbst eine Massenträgheit aufweisenden Anlenkstangen unvermeidlich sind. Die Folge ist, daß mit der vorgeschlagenen Aufhängung die gewünschte Ausgangslage des Verteilgerätes in möglichst gleichmäßigem Abstand über dem horizontalen oder mehr oder weniger geneigten Erdreich durch seitliche Ausschwenkbewegungen des fahrenden landwirtschaftlichen Fahrzeuges noch wesentlich weniger als bei allen bisher bekannten Aufhängungen beeinträchtigt werden kann. Dabei kann die Neigung der Roll- oder Gleitbahnen gewünschtenfalls so gewählt werden, daß die darauf gelagerten Rollen bzw. Gleitschuhe des Verteilgerätes bei Schwankungen des Fahrzeuges jeweils ähnliche Bewegungen wie der am unteren Ende einer entsprechenden Anlenkstange befindliche Anlenkpunkt des der Gattung des Patentanspruchs 1 entsprechenden Verteilgerätes gemäß der FR-A-2 289 116 ausführen. Die vorgeschlagene Laufrollen- oder Gleitschuhlagerung nebst Roll- bzw. Gleitbahnen bietet aber noch den weiteren Vorteil, daß die Roll- oder Gleitbahnen in ihrem Verlauf nicht an eine Kreisbogenform gebunden sind, wie es mit dem unteren Ende einer um ihren Aufhängungspunkt schwenkbaren Anlenkstange der Fall ist, sondern entsprechend den Ergebnissen praktischer Versuche beliebig gekrümmt oder auch geradlinig gestaltet werden können.

Eine Rollenführung mit zwei an einem Gestell des landwirtschaftlichen Fahrzeuges gelagerten Rollen weist zwar auch die Aufhängung des Verteilgerätes gemäß der DE-A-1 607 387 auf ; abgesehen davon, daß es sich hier um keine frei bewegliche, sondern um eine in ihrer Winkelstellung zwangsgesteuerte Aufhängung handelt, würde ein etwaiger Verzicht auf die Zwangssteuerung auch hier zu Pendelschwingungen des über einen unebenen Boden geführten Verteilgerätes führen, weil ja auch dieses Verteilgerät an einer oberen Pendelachse gelagert ist. Infolgedessen konnte diese vorbekannte Rollenführung keine Anregung zu der pendelfreien Aufhängung gemäß der vorliegenden Erfindung geben.

Die im Patentanspruch 2 vorgeschlagene Ausgestaltung ist besonders vorteilhaft in Verbindung mit der Ausführungsform des Patentanspruchs 1 mit der obersten Rollen- oder Gleitschuhlagerung unmittelbar am Querträger, weil sich dann bei gleicher Bauhöhe des Querträgers des Fahrgestells ein besonders großer lotrechter Abstand des Schwerpunktes des Verteilgerätes von dessen am Querträger befindlicher (oberster) Rollen- oder Gleitschuhlagerung und damit auch ein entsprechend größeres, die seitlichen Schwankungen des Fahrzeuges ausgleichendes Reaktionsmoment ergibt.

Während eine Aufhängung des Verteilgerätes über die Rollen oder Gleitschuhe und einfache Roll- bzw. Gleitbahnen insofern vorteilhaft sein kann, als das Verteilgerät gewünschtenfalls schnell vom Fahrgestell des landwirtschaftlichen Fahrzeuges abgenommen werden kann, kann es auch erstrebenswert sein, in an sich bekannter Weise einen möglichst unlösbaren Zusammenhalt zwischen dem Verteilgerät und dem Fahrgestell bzw. dem oder den Zwischenbalken und einerseits dem Verteilgerät und anderseits dem Fahrgestell des landwirtschaftlichen Fahrzeuges zu gewährleisten. Ein solcher Zusammenhalt, der zugleich zu einer vor Verschmutzungen geschützteren Lage der Rollen oder Gleitschuhe führt, kann durch die vorteilhafte Lehre gemäß Patentanspruch 5 gewährleistet werden.

Andere vorteilhafte Ausgestaltungen der Erfindung sind in den weiteren Unteransprüchen gekennzeichnet.

In der Zeichnung ist die Erfindung anhand einiger schematisch dargestellter Ausführungsbeispiele veranschaulicht ; es zeigen :

Figur 1 eine erste Ausführungsform der Aufhängung eines Verteilgerätes am Fahrgestell eines landwirtschaftlichen Fahrzeuges für einen Einsatz in horizontalem Gelände in einer Rückansicht (bei horizontal stehendem Fahrzeug) ;

Figur 1a eine der Fig. 1 entsprechende Darstellung bei durch eine einseitige Fahrrinne seitlich ausgeschwenktem Fahrzeug ;

Figur 1b eine gegenüber Fig. 1 abgewandelte Rollbahn nebst zugeordneter Rolle in einer gleichen Rückansicht wie Fig. 1 ;

Figur 2 eine der Fig. 1 entsprechende Rückansicht einer zweiten Ausführungsform der Aufhängung des Verteilgerätes für einen Einsatz des landwirtschaftlichen Fahrzeuges entlang einem Hang ;

Figur 2a eine der Fig. 2 entsprechende Rückansicht während einer Fahrt des Fahrzeuges entlang einem Hang ;

Figur 2b eine gegenüber Fig. 2 abgewandelte Rollbahn nebst darauf geführter Rolle in einer gleichen Ansicht wie Fig. 2 ;

Figur 3 eine dritte, im übrigen der Fig. 1 entsprechende Ausführungsform der Aufhängung des Verteilgerätes an einem Querträger des Fahrgestells über einen Zwischenbalken (in einer der Fig. 1 entsprechenden Rückansicht) ;

Figur 3a eine der Fig. 1a entsprechende Rückansicht der Aufhängung gemäß Fig. 3 bei durch eine einseitige Fahrrinne seitlich ausgeschwenktem Fahrzeug ;

Figur 4 eine im übrigen der Fig. 2 entsprechende Aufhängung, bei der das Verteilgerät ebenfalls über einen Zwischenbalken an einem Querträger des Fahrgestells aufgehängt ist (in einer gleichen Rücksansicht wie Fig. 2) ;

Figur 5 eine vergrößerte Ausschnittdarstellung einer gegenüber Fig. 3 abgewandelten Aufhängung (ebenfalls in einer Rückansicht) ;

Figur 6 eine vergrößerte Ausschnittdarstellung einer gegenüber Fig. 4 abgewandelten Aufhängung (ebenfalls in einer Rückansicht) ;

Figur 7 eine grundsätzlich einer kinematischen Umkehr der Aufhängung gemäß Fig. 3 entsprechende Ausführungsform der Aufhängung des Verteilgerätes an einem Querträger des Fahrgestells eines landwirtschaftlichen Fahrzeuges über einen Zwischenbalken für einen Einsatz in horizontalem Gelände (in einer Rückansicht bei horizontal stehendem Fahrzeug) ;

Figur 7a eine Rückansicht der Aufhängung gemäß Fig. 7 bei durch eine einseitige Fahrrinne seitlich ausgeschwenktem Fahrzeug ;

Figur 8 eine vergrößerte Ausschnittdar-

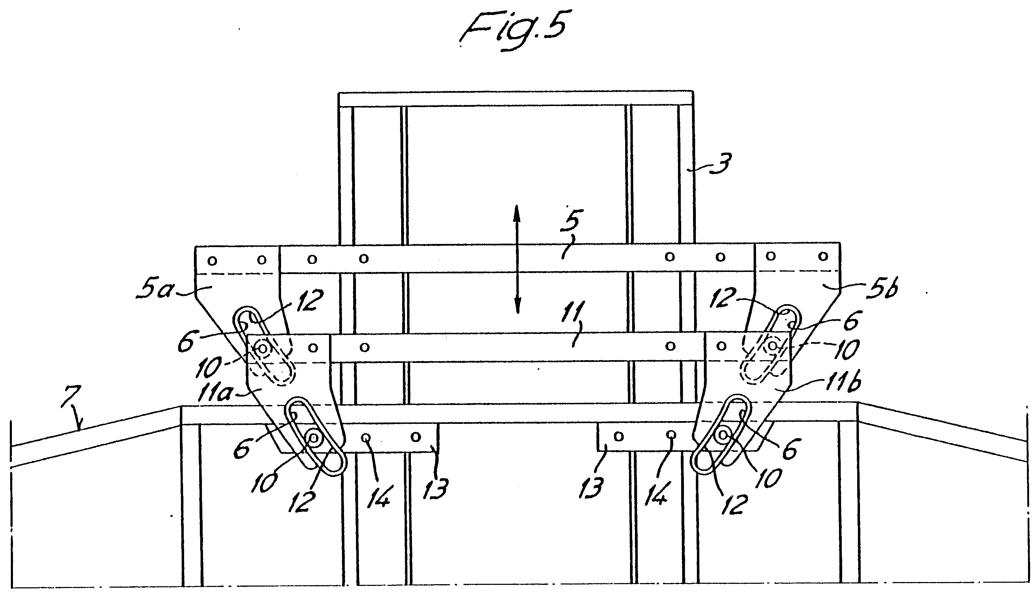

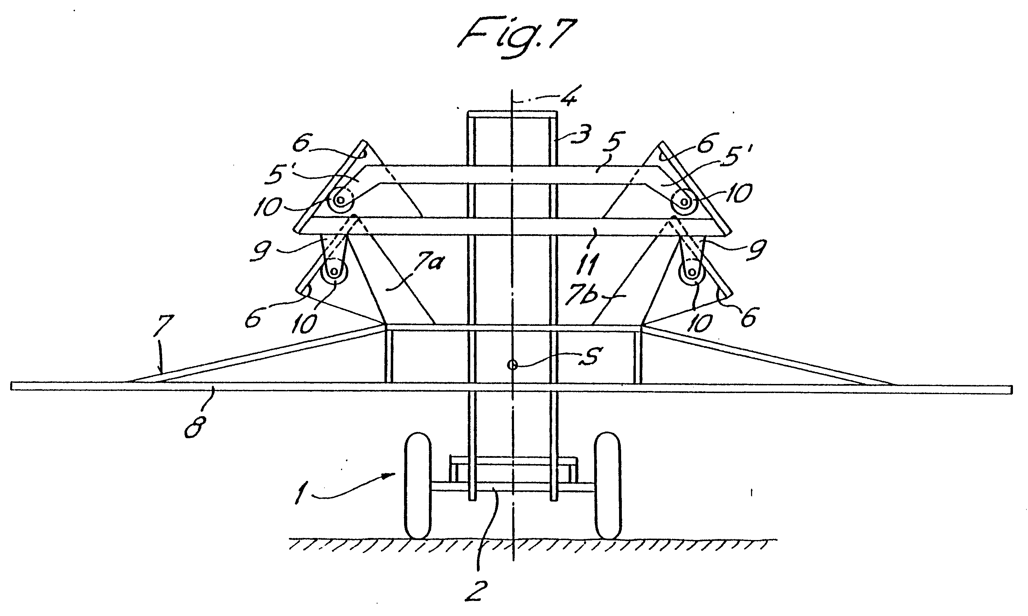

stellung einer gegenüber Fig. 7 abgewandelten, etwa der Aufhängung gemäß Fig. 5 entsprechenden Aufhängung (ebenfalls in einer Rückansicht bei horizontal stehendem Fahrzeug).

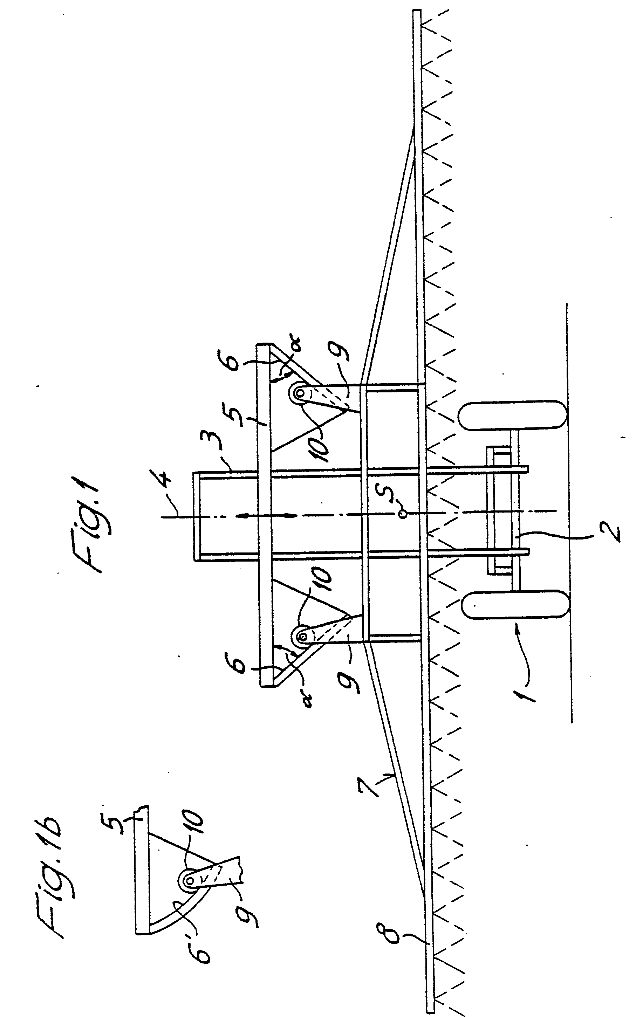

Das in Fig. 1 dargestellte landwirtschaftliche Fahrzeug 1 weist an der Rückseite seines Fahrgestells 2 eine mit diesem starr verbundene Stütze 3 auf, die in ihrem oberen Bereich hinten einen zugleich quer zur Längsmittelebene 4 des Fahrzeuges 1 verlaufenden Querträger 5 trägt. Der Querträger 5 ist an der Stütze 3 in üblicher, nicht besonders dargestellter Weise höhenverstellbar angeordnet.

Der die Stütze 3 beiderseits überragende Querträger 5 weist an seinen beiden Enden spiegelbildlich jeweils geradlinig schräg nach innen unten verlaufende Rollbahnen 6 auf, die gegenüber dem Querträger 5 jeweils um einen Winkel $\alpha$ von etwa 60° geneigt verlaufen.

Über die beiden Rollbahnen 6 ist am Querträger 5 ein Verteilgerät 7 aufgehängt, welches an seiner Unterseite ein langgestrecktes und am Fahrzeug 1 quer zu dessen Längsrichtung beiderseits in gleichmäßigem Abstand über dem Erdreich herausragendes Spritzrohr 8 zum Verspritzen und gleichmäßigen Verteilen von flüssigen oder festen Stoffen auf dem Erdreich oder gegebenenfalls auf darauf wachsenden Pflanzen aufweist. Das Spritzrohr 8 weist über seine Länge in gleichmäßigen Abständen verteilt Düsen auf, durch welche der zu verspritzende Stoff, beispielsweise ein Düngemittel, entlang jeweils einem Spritzkegel verspritzt werden kann. Die Mitführung sowie die Zuführung des Spritzgutes zum Spritzrohr 8 und auch die Ausbildung der vorgenannten Düsen kann irgendeiner bekannten Ausführung entsprechen und bildet keinen Gegenstand der vorliegenden Erfindung, weshalb diese Einzelheiten nachstehend nicht näher beschrieben werden und in der Zeichnung auch nicht dargestellt sind.

Wie aus Fig. 1 weiterhin hervorgeht, weist das Verteilgerät 7 spiegelbildlich zu seiner Quermittelebene und zugleich im mittleren Abstand der beiden Rollbahnen 6 zwei nach oben ragende Tragarme 9 auf, an deren freien Enden je eine auf der zugeordneten Rollbahn 6 ruhende Rolle 10 gelagert ist. Infolgedessen kann das Verteilgerät 7 bei einer entsprechenden Krafteinwirkung in seiner lotrechten Längsmittelebene innerhalb eines kleinen Schwenkbereiches Schwenkbewegungen relativ zum Querträger 5 ausführen, bei denen die Rollen 10 auf den Rollbahnen 6 entsprechende Abrollbewegungen ausführen. Tatsächlich dient die beschriebene Aufhängung jedoch nicht zum Ausschwenken des Verteilgerätes 7 gegenüber dem Erdreich, sondern in der nachstehend näher beschriebenen Weise dazu, seine vorbestimmte Ausgangslage trotz seitlicher Schwankungen des Fahrzeuges 1 beizubehalten.

Gerät das landwirtschaftliche Fahrzeug während der Fahrt aus einer genau horizontalen Fahrbahn (vgl. Fig. 1) beispielsweise mit seinen rechten Rädern in eine Fahrrinne und wird dadurch in der aus Fig. 1a ersichtlichen Weise geschwenkt, dann hat die beschriebene Aufhängung zur Folge, daß das Verteilgerät 7 aufgrund seines gegenüber den Rollen 10 seiner Aufhängung wesentlich tieferen Schwerpunktes S und seiner großen Massenträgheit seine vorherige genau horizontale Lage praktisch unbeeinflußt beibehält. Infolgedessen erfährt auch die Verteilung des Spritzgutes während des Einsatzes des Verteilgerätes 7 keine Veränderung und es kann selbst dann mit einer sehr gleichmäßigen Verteilung des Spritzgutes auf einem Acker mit oder ohne Bewuchs gerechnet werden, wenn das landwirtschaftliche Fahrzeug bei seinem Einsatz über einen unebenen Boden mit entsprechenden Fahrzeugschwankungen fährt.

Während die Rollbahnen 6 gemäß Fig. 1 geradlinig verlaufen, kann es beispielsweise in Abhängigkeit von der Größe des Verteilgerätes 7 auch vorteilhaft sein, schwach konkav gekrümmte Rollbahnen 6' zu verwenden, wie sie in Fig. 1b dargestellt sind.

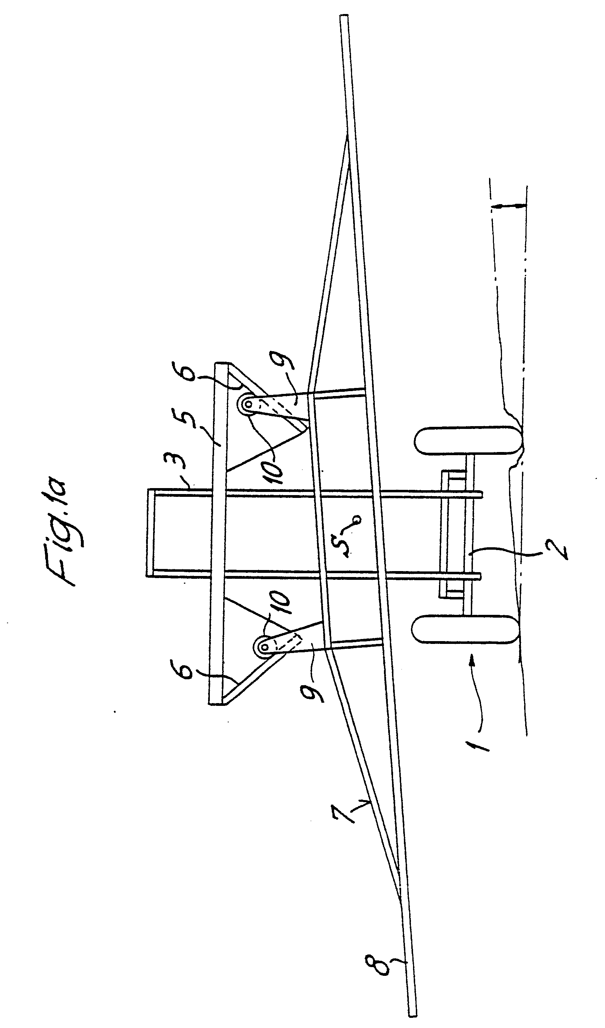

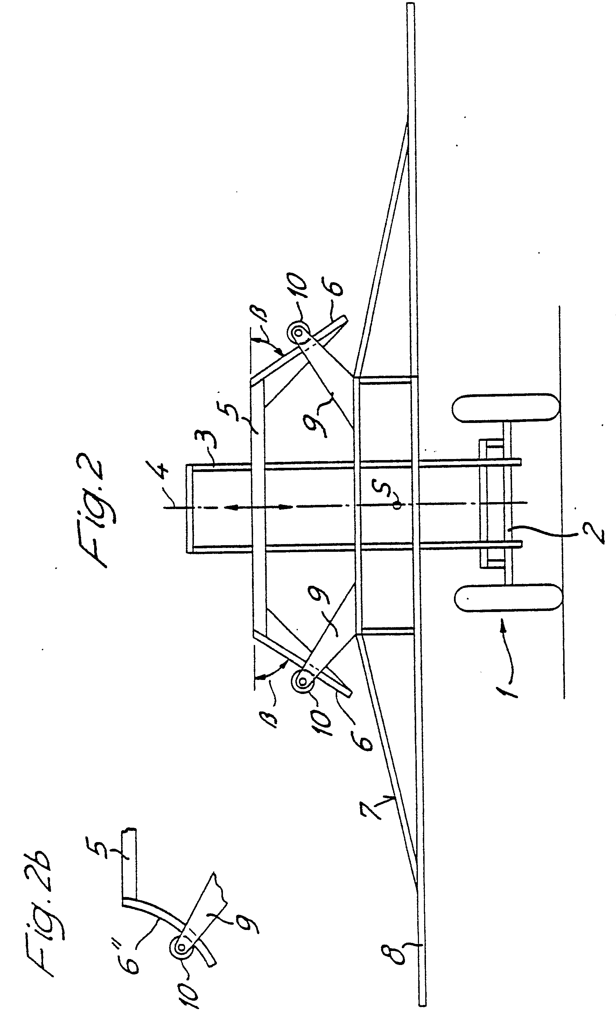

Das in Fig. 2 dargestellte zweite Ausführungsbeispiel unterscheidet sich vom ersten Ausführungsbeispiel dadurch, daß die an den beiden Enden des Querträgers 5 befindlichen Rollbahnen 6 spiegelbildlich unter jeweils einem Winkel $\beta$ von etwa 60° geradlinig nach außen unten verlaufen. Steht oder fährt das Fahrzeug 1 mit dieser Aufhängung auf einer horizontalen Fahrbahn, so verbleibt auch hier das Spritzrohr 8 in einer horizontalen Ebene oberhalb der Fahrbahn. Wird das Fahrzeug 1 demgegenüber jedoch in der aus Fig. 2a ersichtlichen Weise entlang einem Hang eingesetzt, dann hat die geänderte Aufhängung zur Folge, daß nunmehr auch das Verteilgerät 7 um nahezu den gleichen Winkel wie das Fahrzeug 1 aus seiner horizontalen Lage mit ausgeschwenkt wird. Treten dann während der Fahrt entlang dem Hang Unebenheiten der Fahrbahn auf, dann gilt auch hier, daß der gegenüber den Rollen 10 tiefere Schwerpunkt S des Verteilgerätes 7 und dessen Massenträgheit eine Beibehaltung der vorherigen Lage mit ebenfalls über die ganze Länge des Spritzrohres 8 nahezu gleichbleibendem Abstand gegenüber dem Hang zur Folge haben.

Auch bei dem zweiten Ausführungsbeispiel kann es vorteilhaft sein, der Rollbahn 6" gemäß Fig. 2b eine schwach konkav geneigte Form zu geben.

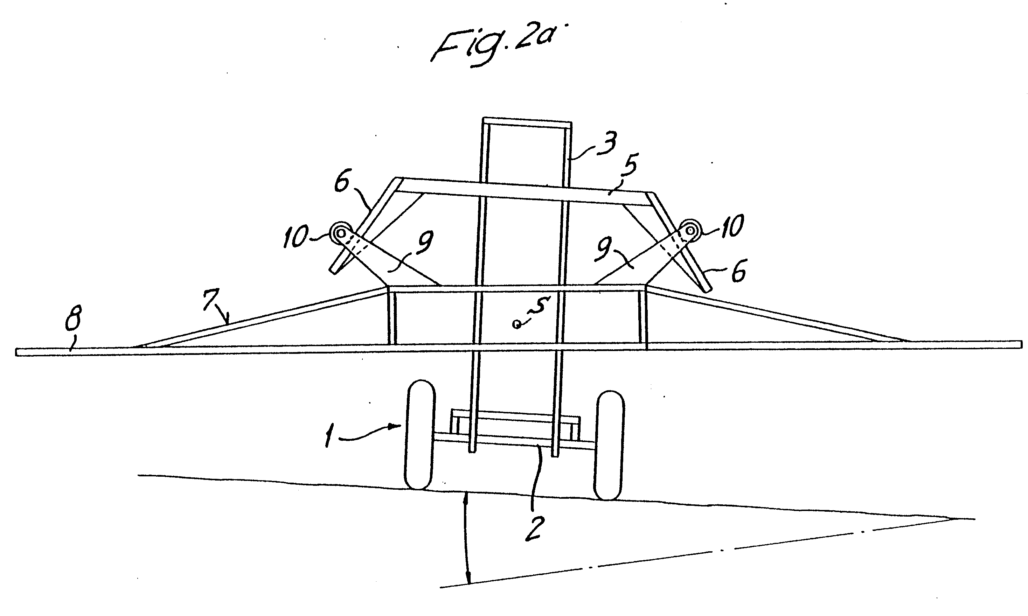

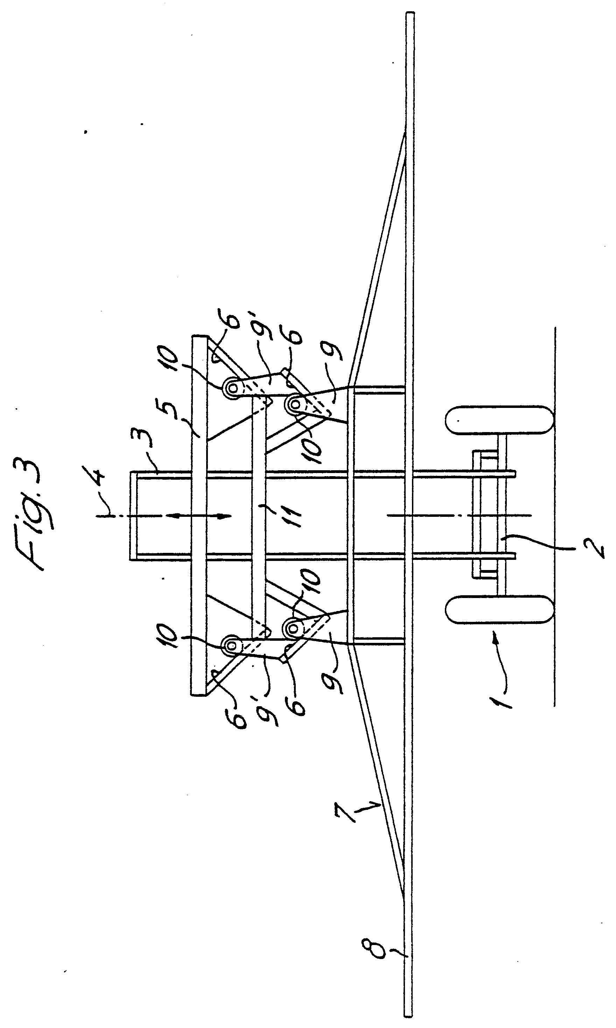

Das in Fig. 3 dargestellte dritte Ausführungsbeispiel unterscheidet sich vom ersten Ausführungsbeispiel dadurch, daß das Verteilgerät 7 am Querträger 5 über einen Zwischenbalken 11 unter Beibehaltung des Aufhängungsprinzips des ersten Ausführungsbeispiels aufgehängt ist. Der in gleicher Weise wie das Verteilgerät 7 des ersten Ausführungsbeispiels über Rollen 10 auf den Rollbahnen 6 des Querträgers 5 gelagerte Zwischenbalken 11 trägt an seinen beiden, nach unten verlängerten Tragarmen 9' ebenfalls Rollbahnen 6, die in gleicher Weise wie die Rollbahnen 6 des Querträgers 5 spiegelbildlich zueinander nach innen unten verlaufen. Das Verteilgerät 7 ist hierbei seinerseits über seine Rollen 10 auf den beiden unteren Rollbahnen 6 gelagert. Dabei bietet die Aufhängung des Verteilgerätes 7 am Querträger 5 über den gesonderten zwischenbalken 11, wie aus Fig. 3a ersichtlich ist, den Vorteil, daß auch größere Schwenkausschläge des Fahrzeuges 1 gegenüber dem in seiner horizontalen Lage verbleibenden Verteilgerät 7 möglich sind.

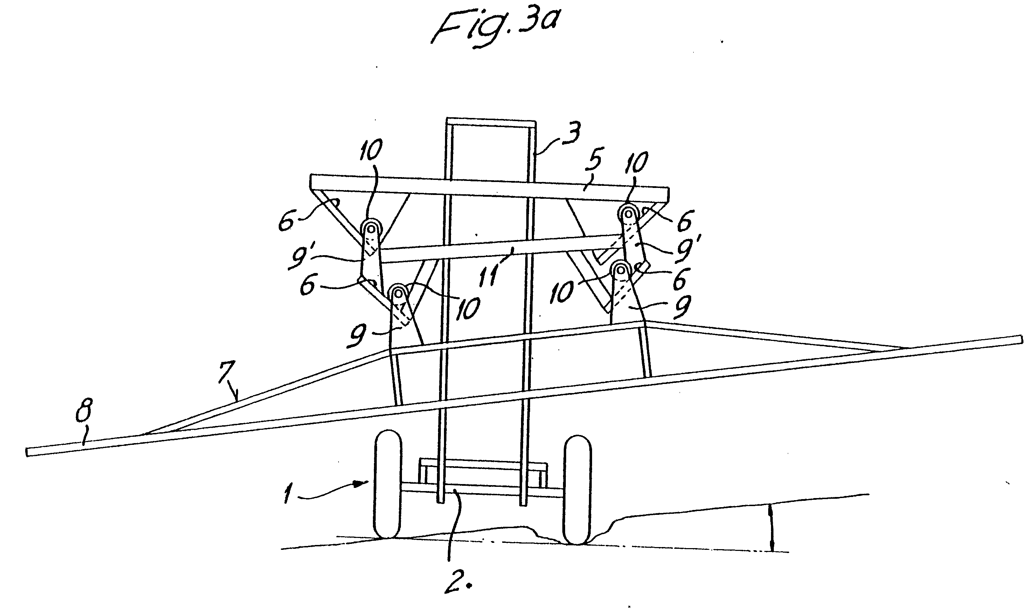

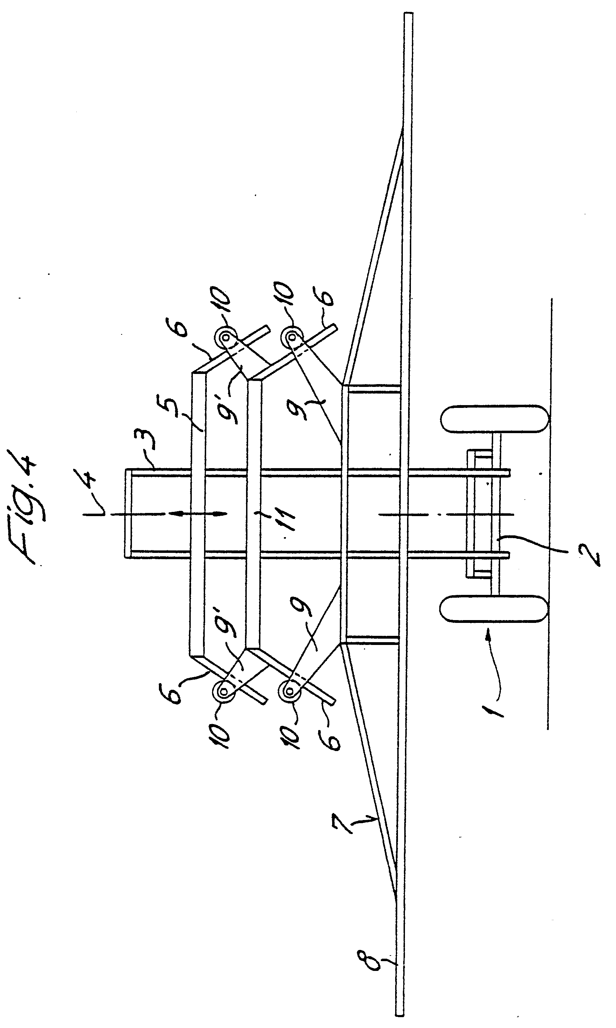

Das in Fig. 4 dargestellte vierte Ausführungsbeispiel unterscheidet sich von dem in Fig. 2 dargestellten zweiten Ausführungsbeispiel in grundsätzlich gleicher Weise durch einen zusätzlichen Zwischenbalken 11, wie sich das dritte Ausführungsbeispiel vom ersten Ausführungsbeispiel unterscheidet. Auch hier bietet die Aufhängung des Verteilgerätes 7 am Querträger 5 über den Zwischenbalken 11 den Vorteil, daß bei Zugrundelegung einer beispielsweise aus Fig. 2a ersichtlichen Fahrt des Fahrzeuges 1 entlang einem Hang beiderseitige Schwenkausschläge des Fahrzeuges 1, die auf die vorgegebene Ausgangslage des Verteilgerätes 7 ohne einen nennenswerten Einfluß bleiben, größer als bei dem in Fig. 2 dargestellten Ausführungsbeispiel sein können.

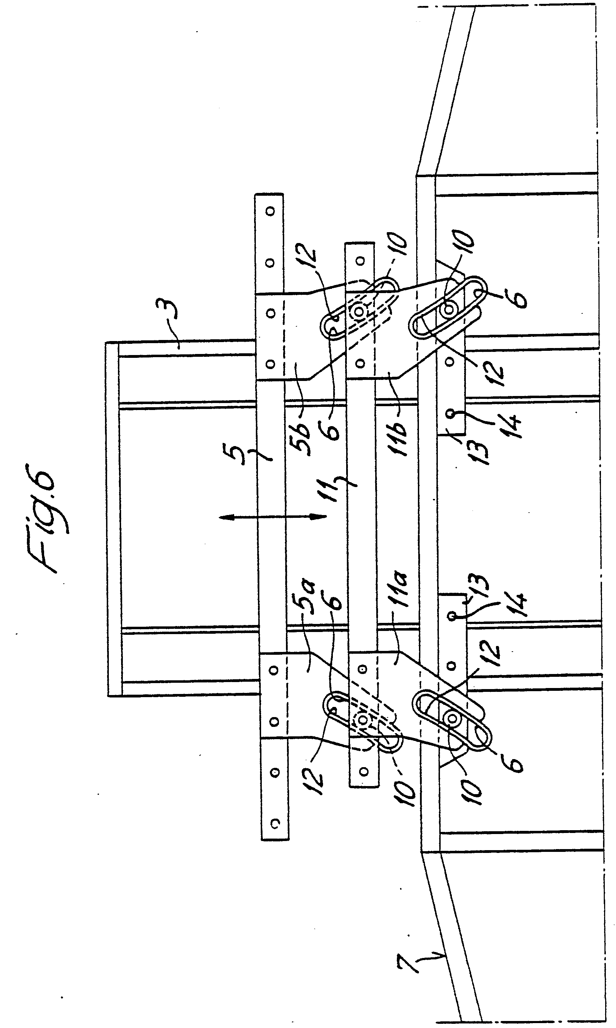

Bei dem fünften Ausführungsbeispiel, welches in Fig. 5 ohne Einzelheiten des mit den vorhergehenden Ausführungsbeispielen übereinstimmenden landwirtschaftlichen Fahrzeuges dargestellt ist, bilden die in grundsätzlich gleicher Weise wie beim dritten Ausführungsbeispiel sowohl am Querträger 5 als auch am Zwischenbalken 11 angeordneten Rollbahnen 6 jeweils einen Bestandteil eines Langloches 12, das sich jeweils in gesonderten, mit dem Querträger 5 bzw. Zwischenbalken 11 lösbar verbundenen Endteilen 5a und 5b des Querträgers 5 bzw. 11a und 11b des Zwischenbalkens 11 befindet. Die beiden Rollen 10 des Verteilgerätes 7 befinden sich an Zwischenstücken 13, die am Verteilgerät 7 lösbar und versetzbar angeordnet sein können. Während die Ergänzung der Rollbahnen 6 zu in ihrer Breite dem Durchmesser der Rollen 10 angepaßten Langlöchern 12 den Vorteil eines besseren Zusammenhaltes der ganzen Verteilgerätaufhängung gegenüber etwaigen Stoßbeanspruchungen und darüber hinaus auch den Vorteil eines besseren Schutzes der Rollbahnen 6 gegenüber Staub und Schmutz ermöglicht, wozu die Langlöcher 12 beiderseits noch mit beispielsweise an den die Rollen 10 tragenden Teilen angebrachten (nicht dargestellten) Schutzblechen versehen sein könnten, bietet die lösbare Anordnung der Endteile 5a und 5b sowie 11a und 11b am zugeordneten Querträger 5 bzw. Zwischenbalken 11 den weiteren großen Vorteil, daß ein und dieselbe Aufhängung, die gemäß Fig. 5 analog dem in Fig. 3 dargestellten Ausführungsbeispiel für eine Verwendung auf einem horizontalen Gelände bestimmt ist, unter jeweiliger, aus Fig. 6 ersichtlicher Vertauschung und gleichzeitiger Versetzung der Endteile 5a und 5b bzw. 11a und 11b am Querträger 5 sowie Zwischenbalken 11 in eine zur Fahrt des Fahrzeuges 1 entlang einem Hang benötigte Aufhängung umgeändert werden kann, die in ihrer Funktion dem in Fig. 4 dargestellten vierten Ausführungsbeispiel gleicht.

Bei dem in Fig. 7 dargestellten sechsten Ausführungsbeispiel weist der die Stütze 3 beiderseits überragende Querträger 5 an seinen beiden Enden spiegelbildlich jeweils gleichartig schräg nach außen unten verlaufende Endteile 5' auf, an deren äußeren Enden je eine Rolle 10 gelagert ist, während das Verteilgerät 7 spiegelbildlich zu seiner Quermittelebene und in einem etwa dem Abstand der beiden Rollen 10 entsprechenden gegenseitigen Abstand je eine schräg nach außen unten verlaufende Rollbahn 6 aufweist, die am Verteilgerät 7 über je ein von diesem schräg nach außen oben ragendes Endteil 7a bzw. 7b festgelegt ist. Auch hier ist das Verteilgerät 7 am Querträger 5 über einen Zwischenbalken 11 aufgehängt, der an seinen beiden Enden jeweils schräg nach oben innen verlaufende Rollbahnen 6 aufweist, über die er an den beiden Rollen 10 des Querträgers 5 aufgehängt ist. Er hat somit beim Auftreten entsprechender Kippmomente die Möglichkeit, gegenüber dem Querträger 5 innerhalb der dargestellten Querebene des Fahzeuges 1 in einem gewissen Umfange zu pendeln.

Der Zwischenbalken 11 weist im Bereich seiner beiden gegenüberliegenden Enden und zugleich unterhalb seiner beiden Rollbahnen 6 noch je einen nach unten ragenden Tragarm 9 auf, an dessen freiem Ende eine weitere Rolle 10 gelagert ist, auf der die dort zugeordnete Rollbahn 6 des Verteilgerätes 7 von oben her aufruht. Infolgedessen kann auch das Verteilgerät 7 gegenüber dem Zwischenbalken 11 Pendelbewegungen in einer gleichen Querebene wie der Zwischenbalken 11 ausführen.

Gerät des Fahrzeug 1 während der Fahrt über ein horizontales Gelände beispielsweise mit seinen rechten Rädern in eine Fahrrinne und wird dadurch in der aus Fig. 7a ersichtlichen Weise ausgeschwenkt, dann hat die beschriebene Aufhängung zur Folge, daß das Verteilgerät 7 aufgrund seines gegenüber den Rollen 10 seiner Aufhängung wesentlich tieferen Schwerpunktes S und seiner großen Massenträgheit seine vorherige, genau horizontale Lage praktisch unbeeinflußt beibehält. Infolgedessen erfährt auch die Verteilung des Spritzgutes während des Einsatzes des Verteilgerätes 7 keine Veränderung und es kann selbst dann mit einer sehr gleichmäßigen Verteilung des Spritzgutes gerechnet werden, wenn das Fahrzeug 1 über einen unebenen Boden mit entsprechenden Fahrzeugschwankungen fährt.

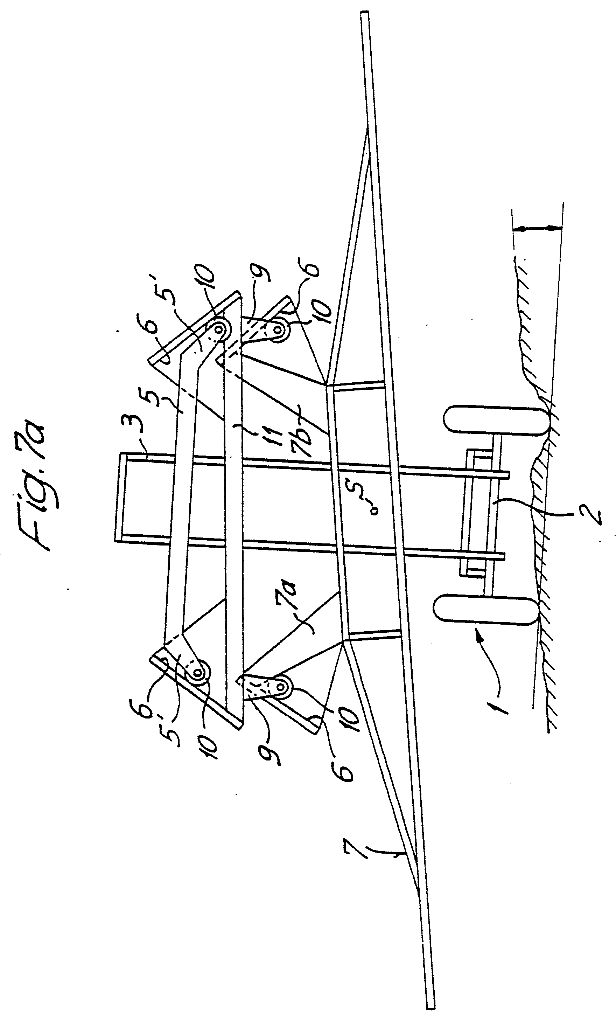

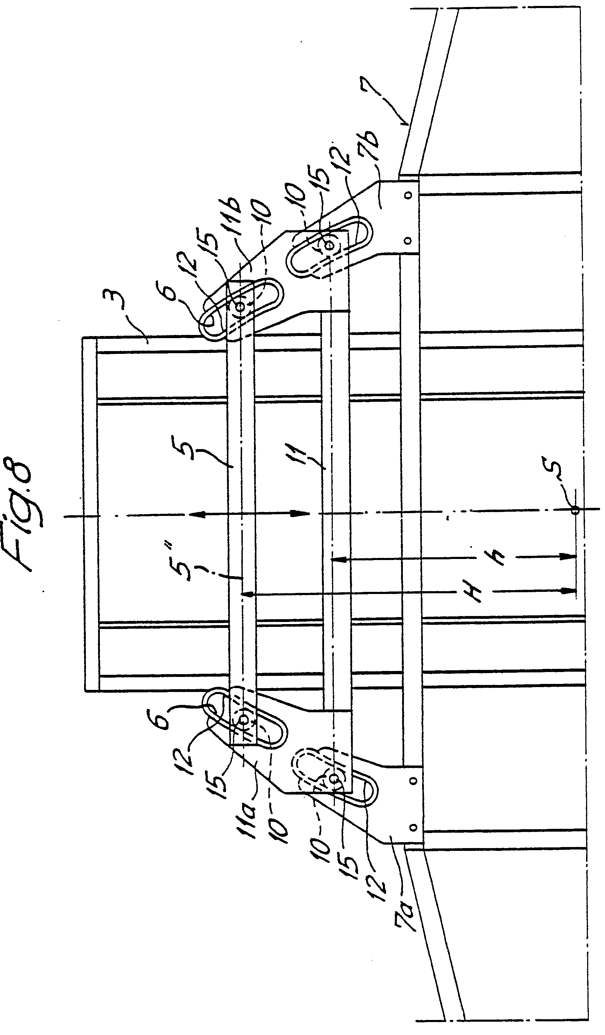

Beim siebenten Ausführungsbeispiel, welches in Fig. 8 ohne Einzelheiten des mit den vorhergehenden Ausführungsbeispielen übereinstimmenden landwirtschaftlichen Fahrzeuges dargestellt ist, bilden die in grundsätzlich gleicher Weise wie beim vorhergehenden Ausführungsbeispiel sowohl am Zwischenbalken 11 als auch am Verteilgerät 7 angeordneten Rollbahnen 6 jeweils einen Bestandteil eines in seiner Breite dem Rollendurchmesser angepaßten Langloches 12, das sich in gesonderten, mit dem Zwischenbalken 11 bzw. Verteilgerät 7 lösbar

verbundenen Endteilen 11a und 11b des Zwischenbalkens 11 bzw. 7a und 7b des Verteilergerätes 7 befindet. Der Querträger 5 und der Zwischenbalken 11 sind bis zu ihren jeweils ein Lager 15 für die Rollen 10 tragenden gegenüberliegenden Enden geradlinig gestreckt ausgebildet, womit die angenähert von der Längsachse 5″ des Querträgers 5 aus gemessene Bauhöhe H der Aufhängung des Verteilergerätes 7 über dessen Schwerpunkt S optimal zur Erzeugung größtmöglicher Pendelmomente zur Stabilisierung der Lage des Verteilergerätes 7 bei Querschwankungen des fahrenden Fahrzeuges 1 ausgenutzt ist.

Das gleiche gilt auch bezüglich der Pendelbewegungen des Verteilergerätes 7 gegenüber dem Zwischenbalken 11, da sich auch hier eine optimale Höhe h der am Zwischenbalken 11 gelagerten Rollen 10 über dem Schwerpunkt S des Verteilergerätes 7 ergibt.

Die Wirkungsweise der dem siebenten Ausführungsbeispiel entsprechenden Aufhängung bei einem Betrieb des landwirtschaftlichen Fahrzeuges ist grundsätzlich genauso, wie es für das sechste Ausführungsbeispiel anhand der Fig. 7a veranschaulicht ist.

Die lösbare Anordnung der Endteile 7a und 7b am Verteilgerät 7 und der Endteile 11a und 11b am Zwischenbalken 11 dient dazu, diese Teile in der bereits anhand der Fig. 5 und 6 beschriebenen Weise so versetzt anordnen zu können, daß ein und dieselbe Aufhängung, die gemäß Fig. 8 analog dem in Fig. 7 dargestellten Ausführungsbeispiel für eine Verwendung auf einem horizontalen Gelände bestimmt ist, unter jeweiliger, bereits in Fig. 6 veranschaulichter Vertauschung und gleichzeitiger Versetzung der Endteile 11a und 11b am Zwischenbalken 11 und der Endteile 7a und 7b am Verteilergerät 7 in eine zur Fahrt des Fahrzeuges 1 entlang einem Hang benötigte Aufhängung umgeändert werden kann, die in ihrer Funktion bereits anhand der Fig. 4 beschrieben ist.

Es ist auch denkbar, das Verteilergerät 7 sogar über zwei oder mehr Zwischenbalken 11 am Querträger 5 aufzuhängen, falls es hierdurch möglich sein sollte, die angestrebte ruhige horizontale oder dem Hang entsprechend geneigte Lage des Verteilergerätes 7 auch bei größeren seitlichen Schwankungen des Fahrzeuges 1 sicherzustellen.

Statt Rollbahnen und Rollen können auch Gleitbahnen und gegenüber Rollenlagerungen einfachere und robustere Gleitschuhe vorgesehen sein. Die Rollen 10 können in üblicher Weise aus Metall bestehen und mittels Kugel-, Rollen- oder Gleitlagern gelagert sein ; sie können aber auch vorteilhaft aus Kunststoff bestehen und auf ihren Achsen in einfacher und wartungsfreier Weise selbstschmierend gelagert sein.

Statt versetzbarer Zwischenstücke 13 könnte das Verteilergerät 7 gemäß Fig. 6 auch an starr festgelegten Zwischenstücken 13 unterschiedliche gegenseitige Abstände aufweisende Paare von Lagerbohrungen 14 aufweisen, in die die zugeordneten Rollen 10 je nach Bedarf mit ihren Achsen eingeführt werden können.

Während die Neigungswinkel α und β der Rollbahnen 6 in den Ausführungsbeispielen 1 bis 4 und 7 mit 60° angenommen wurden, könnten diese Winkel entsprechend praktischen Versuchsergebnissen auch in einem Bereich von ± 15° von 60° abweichen. Entsprechend dem jeweiligen Einsatz des Verteilergerätes kann es schließlich auch vorteilhaft sein, den Roll- oder Gleitbahnen eines Zwischenbalkens eine gegenüber der Neigung der Roll- oder Gleitbahnen des Querträgers gegensätzliche Neigung zu geben.

Die für eine Anwendung des Verteilergerätes an einem Hang vorgesehenen Ausführungsformen gemäß den Fig. 2, 4 und 6 lassen sich ebenfalls vorteilhaft auf einem horizontalen Gelände einsetzen, wiewohl die speziell für das letztgenannte Gelände entwickelten Ausführungsformen gemäß den Fig. 1, 3, 5, 7 und 8 dort bei unebenen Fahrbahnen und entsprechende Querschwankungen ausführendem Fahrzeug eine besonders zuverlässige Horizontalführung des Verteilergerätes ergeben.

**Patentansprüche**

1. Aufhängung eines Verteilergerätes (7) mit einem langgestreckten, über seine Länge in möglichst gleichmäßigem Abstand über dem Erdreich quer zu sich selbst zu führenden Spritzrohr (8) zum Verspritzen flüssiger oder fester Stoffe am Fahrgestell (2) eines landwirtschaftlichen Fahrzeuges (1), wobei das Verteilergerät (7) oberhalb seines Schwerpunktes (S) innerhalb seiner lotrechten Längsebene (4) an den beiden Enden eines Querträgers (5) des Fahrgestells (2) zweifach in gegenseitigem Abstand unmittelbar oder mittelbar über einen selbst am Querträger (5) in gleicher Weise aufgehängten Zwischenbalken (11) schaukelartig beweglich aufgehängt ist, dadurch gekennzeichnet, daß der Querträger (5) an seinen beiden Enden zwei spiegelbildlich schräg nach außen oder innen unten verlaufende, gemeinsam eine nicht kreisbogenförmige Auflagefläche bildende Rollbahnen (6 bzw. 6′, 6″) oder Gleitbahnen aufweist, auf denen das Verteilergerät (7) mit je einer an ihm gelagerten Rolle (10) oder je einem an ihm gelagerten Gleitschuh unmittelbar oder mittelbar über den Zwischenbalken (11) gelagert ist, der an seinen beiden Enden ebenfalls spiegelbildlich schräg nach außen oder innen unten verlaufende Rollbahnen (6) oder Gleitbahnen für diese Rollen (10) bzw. Gleitschuhe und außerdem zwei obere, auf den Rollbahnen (6) bzw. Gleitbahnen des Querträgers (5) gelagerte Rollen (10) bzw. Gleitschuhe aufweist, oder daß die Rollen (10) oder Gleitschuhe statt am Verteilergerät (7) am Querträger (5) gelagert und die schräg nach außen oder innen unten verlaufenden Rollbahnen (6) bzw. Gleitbahnen für die Rollen (10) bzw. Gleitschuhe an der Oberseite des Verteilergerätes (7) angeordnet sind, und daß der oder die gegebenenfalls vorgesehene(n) Zwischenbalken (11) die Rollbahnen (6) bzw.

Gleitbahnen oberhalb der an ihm bzw. ihnen gelagerten Rollen (10) bzw. Gleitschuhe aufweist bzw. aufweisen.

2. Aufhängung nach Anspruch 1, dadurch gekennzeichnet, daß der Querträger (5) und gegebenenfalls auch der oder die Zwischenbalken (11) bis zu seiner bzw. ihren jeweils ein Lager (15) für die Rollen (10) oder die Gleitschuhe tragenden gegenüberliegenden Enden geradlinig gestreckt ausgebildet ist bzw. sind (Fig. 7 und 8).

3. Aufhängung nach Anspruch 1 oder 2, dadurch gekennzeichnet, daß die Rollbahnen (6) oder Gleitbahnen des Zwischenbalkens (11) gleichartig wie die Rollbahnen (6) bzw. Gleitbahnen des Querträgers (5) bzw. Verteilgerätes (7) geneigt sind (Fig. 3, 4, 7 und 8).

4. Aufhängung nach Anspruch 1, dadurch gekennzeichnet, daß die Rollbahnen (6) oder Gleitbahnen des Zwischenbalkens (11) umgekehrt wie die Rollbahnen (6) oder Gleitbahnen des Querträgers (5) bzw. Verteilgerätes (7) geneigt sind.

5. Aufhängung nach einem der vorhergehenden Ansprüche, dadurch gekennzeichnet, daß die Rollbahnen (6) oder Gleitbahnen jeweils geradlinig verlaufen.

6. Aufhängung nach einem der Ansprüche 1 bis 4, dadurch gekennzeichnet, daß die Rollbahnen (6) oder Gleitbahnen des Querträgers (5) bzw. Verteilgerätes (7) und/oder Zwischenbalken (11) jeweils paarweise schwach konkav gekrümmt verlaufen (Fig. 1b, 2b, 5, 6 und 8).

7. Aufhängung nach einem der vorhergehenden Ansprüche, dadurch gekennzeichnet, daß jede Rollbahn (6) oder Gleitbahn von dem einen Seitenrand eines in einem gesonderten Endteil (5a, 5b bzw. 7a, 7b und 11a, 11b) des Querträgers (5) bzw. Verteilgerätes (7) und gegebenenfalls Zwischenbalkens (11) befindlichen Langloches (12) gebildet ist, dessen Breite dem Durchmesser der zugeordneten Rollen (10) bzw. der Gleitschuhhöhe angepaßt ist (Fig. 5, 6 und 8).

8. Aufhängung nach einem der vorhergehenden Ansprüche, dadurch gekennzeichnet, daß die die Rollbahnen (6) bzw. Gleitbahnen aufweisenden Endteile (5a, 5b, 7a, 7b und 11a, 11b) am Querträger (5) bzw. Verteilgerät (7) und gegebenenfalls Zwischenbalken (11) jeweils lösbar und seitenvertauschbar und hierzu am zugeordneten Tragteil in einem entsprechend veränderbaren gegenseitigen Abstand festlegbar sind.

9. Aufhängung nach einem der vorhergehenden Ansprüche, dadurch gekennzeichnet, daß das Verteilgerät (7) am Querträger (5) über zwei oder mehr von oben nach unten aneinanderhängende Zwischenbalken (11) mit jeweils spiegelbildlich schräg nach außen oder innen unten verlaufenden Rollbahnen (6) oder Gleitbahnen und Rollen (10) bzw. Gleitschuhen aufgehängt ist.

10. Aufhängung nach einem der vorhergehenden Ansprüche, dadurch gekennzeichnet, daß die Rollbahnen (6) oder Gleitbahnen gegenüber dem sie tragenden Tragteil (Querträger 5 bzw. Verteilgerät 7 und gegebenenfalls Zwischenbalken 11) wenigstens in ihrem die zugeordnete Rolle (10) bzw. den zugeordneten Gleitschuh in der zugeordneten Ausgangslage aufnehmenden Mittelbereich eine Neigung (α bzw. β) in einem Bereich von 60° ± 15° aufweisen.

11. Aufhängung nach einem der vorhergehenden Ansprüche, dadurch gekennzeichnet, daß der Querträger (5) an einer Stütze (3) des Fahrgestells (2) höhenverstellbar festgelegt ist.

**Claims**

1. Suspension of a distributing appliance (7) comprising an elongated spray-pipe (8) guided, over its length, in a direction at right angles thereto, at a distance as uniform as possible above the ground, for the purpose of spraying liquid or solid substances, from the chassis (2) of an agricultural vehicle (1), the said distributing appliance (7) being suspended from the two ends of a cross-beam (5) above its center of gravity (S), movable in rocking motions within its vertical longitudinal plane (4), directly or indirectly, by means of an intermediate beam (11) itself equally suspended from the said cross-beam, characterised in that the cross-beam (5) comprises, at its two ends, roller-tracks (6, 6', 6"), or sliding ways, extending obliquely outwardly or inwardly, in mirror image, in a downward direction and together forming a non-circular bearing surface, the distributing appliance (7) being mounted upon the said roller-tracks or sliding ways by means of a roller (10) or a sliding shoe mounted thereon, either directly or indirectly by the intermediate beam (11), the latter also comprising, at its two ends, roller-tracks (6) or sliding ways, extending obliquely outwardly or inwardly, in mirror image, in a downward direction, for the said rollers or sliding shoes, and, in addition two upper rollers (10), or sliding shoes, mounted upon the said roller-tracks or sliding ways ; or in that the said rollers or sliding shoes are mounted, instead of upon the distributing appliance (7), upon the said cross-beam (5), the said roller-tracks, or sliding ways, for the said rollers, or sliding shoes, extending obliquely outwardly or inwardly, in a downward direction, for the said rollers or sliding shoes, being arranged upon the top of the said distributing appliance ; and in that the intermediate beam or beams (11), provided if necessary, comprise roller-tracks (6), or sliding ways, above the rollers (10), or sliding shoes mounted upon it or them.

2. A suspension according to claim 1, characterized in that the cross-beam (5), and possibly the intermediate beam or beams (11), runs linearly to its opposite ends, each of which carries a bearing (15) for the rollers (10) or sliding shoes (Figures 7, 8).

3. A suspension according to claim 1 or 2, characterized in that the roller-tracks (6) or sliding ways on the intermediate beam (11) are inclined in the same way as those on the cross-beam (5) and the distributing appliance (7) (Figures 3, 4, 7, 8).

4. A suspension according to claim 1, characterized in that the roller-tracks (6) or sliding ways on the intermediate beam (11) are inclined in a direction opposite to those on the cross-beam (5) and the distributing appliance (7).

5. A suspension according to one of claims 1 to 4, characterized in that the roller-tracks (6) or sliding ways run linearly.

6. A suspension according to one of claims 1 to 4, characterized in that the roller-tracks (6) or sliding ways on the cross-beam (5), the distributing appliance (7) and/or the intermediate beam (11) run in pairs with a slightly concave curve.

7. A suspension according to one of the preceding claims, characterized in that each roller-track (6) or sliding way is formed by one lateral edge of an elongated hole (12) located in a separate end-part (5a, 5b ; 7a, 7b ; 11a, 11b) of the cross-beam (5), the distributing appliance (7) and possibly the intermediate beam (11), the width of the said hole being adapted to the diameter of the rollers (10), or to the height of the sliding shoes, associated therewith (Figures 5, 6, 8).

8. A suspension according to one of the preceding claims, characterized in that the end-parts (5a, 5b, 7a, 7b, 11a, 11b), carrying the roller-tracks (6) or sliding ways, on the cross-beam (5), the distributing appliance (7), and possibly the intermediate beam (11), are respectively detachable and interchangeable from one side to the other, to which end they are adapted to be secured to the relevant support-part at corresponding mutually variable distances.

9. A suspension according to one of the preceding claims, characterized in that the distributing appliance (7) is suspended from the cross-beam (5) by two or more intermediate beams (11) secured one to the other from top to bottom and comprising roller-tracks (6) or sliding ways extending obliquely inwardly or outwardly, in mirror image, in a downward direction, with rollers (10) or sliding shoes.

10. A suspension according to one of the preceding claims, characterized in that the roller-tracks (6) or sliding ways are at an angle ($\alpha$ or $\beta$) of the order of $60° \pm 15°$ in relation to the support-parts (cross-beam 5, distributing appliance 7 and possible intermediate beam 11) carrying them, at least as regards the central area accommodating the relevant roller (10) or sliding shoes, in the relevant initial position.

11. A suspension according to one of the preceding claims, characterized in that the cross-beam (5) is secured to a column (3) on the chassis (2) in such a manner as to be adjustable in height.

**Revendications**

1. Suspension d'un distributeur (7) muni d'une rampe de pulvérisation allongée (8) pouvant être guidée sur sa longueur, transversalement à elle-même, à une distance aussi uniforme que possible au-dessus du sol, pour la pulvérisation de corps liquides ou solides, sur le châssis (2) d'un véhicule agricole (1), le distributeur (7) étant suspendu de façon mobile par basculement, au-dessus de son centre de gravité (3), aux deux extrémités d'une traverse (5) du châssis (2), dans son plan longitudinal vertical (4), deux fois avec espacement mutuel, directement ou indirectement par l'intermédiaire d'une poutre intermédiaire (11), elle-même suspendu sur la traverse (5) de la même façon, caractérisée en ce que la traverse (5) présente à ses deux extrémités deux voies de roulement (6, 6', 6") ou voies de glissement, se dirigeant obliquement vers l'extérieur ou l'intérieur et vers le bas, symétriquement, formant conjointement une surface d'appui qui n'est pas en arc de cercle, sur lesquelles le distributeur (7) est monté, chaque fois par un galet (10) monté dessus ou chaque fois par un patin monté dessus, directement ou indirectement par l'intermédiaire de la poutre intermédiaire (11) qui présente à ses deux extrémités des voies de roulement (6) ou voies de glissement, également dirigées obliquement vers l'extérieur ou l'intérieur et vers le bas, symétriquement, pour ces galets (10) ou patins et, en outre, deux galets (10) ou patins supérieurs montés sur les voies de roulement (6) ou voies de glissement de la traverse (5), ou en ce que les galets (10) ou patins, au lieu d'être montés sur le distributeur (7), sont montés sur la traverse (5), en ce que les voies de roulement (6) ou voies de glissement destinées aux galets (10) ou patins et dirigées obliquement vers l'extérieur ou l'intérieur et vers le bas sont disposées sur le côté supérieur du distributeur (7) et en ce que la ou les poutres intermédiaires (11) éventuellement prévues présentent les voies de roulement (6) ou voies de glissement au-dessus des galets (10) ou patins montés dessus.

2. Suspension selon la revendication 1, caractérisée en ce que la traverse (5) et éventuellement aussi la ou les poutres intermédiaires (11) sont conçues sous forme allongée rectiligne jusqu'à leurs extrémités opposées portant chacune un palier (15) pour les galets (10) ou les patins (figures 7 et 8).

3. Suspension selon l'une des revendications 1 et 2, caractérisée en ce que les voies de roulement (6) ou voies de glissement de la poutre intermédiaire (11) sont inclinées de façon similaire aux voies de roulement (6) ou voies de glissement de la traverse (5) ou du distributeur (7) (figures 3, 4, 7 et 8).

4. Suspension selon la revendication 1, caractérisée en ce que les voies de roulement (6) ou voies de glissement de la poutre intermédiaire (11) sont inclinées de façon inverse des voies de roulement (6) ou voies de glissement de la traverse (5) ou du distributeur (7).

5. Suspension selon l'une des revendications précédentes, caractérisée en ce que les voies de roulement (6) ou voies de glissement sont chacune dirigées en ligne droite.

6. Suspension selon l'une des revendications 1 à 4, caractérisée en ce que les voies de roulement (6) ou voies de glissement de la traverse (5) ou du distributeur (7) et/ou de la poutre intermédiaire (11) sont chaque fois dirigées, deux à deux, avec une légère courbure concave (figures 1b, 2b, 5, 6 et 8).

7. Suspension selon l'une des revendications précédentes, caractérisée en ce que chaque voie de roulement (6) ou voie de glissement est formée par l'un des bords latéraux d'un trou allongé (12) situé dans une partie terminale séparée (5a, 5b, 7a, 7b et 11a, 11b) de la traverse (5) ou du distributeur (7) et éventuellement de la poutre intermédiaire (11), et dont la largeur est adaptée au diamètre des galets (10) adjoints ou à la hauteur des patins (figures 5, 6 et 8).

8. Suspension selon l'une des revendications précédentes, caractérisée en ce que les parties terminales (5a, 5b, 7a, 7b et 11a, 11b) de la traverse (5) ou du distributeur (7) et éventuellement de la poutre intermédiaire (11), présentant les voies de roulement ou voies de glissement, sont chaque fois détachables et intervertibles latéralement et à cet effet, peuvent être fixées à l'élément porteur adjoint à un espacement mutuel variable en conséquence.

9. Suspension selon l'une des revendications précédentes, caractérisée en ce que le distributeur (7) est suspendu à la traverse (5) par l'intermédiaire de deux ou plusieurs poutres intermédiaires (11) accrochées entre elles de haut en bas, présentant chacune des voies de roulement (6) ou voies de glissement dirigées obliquement vers l'extérieur ou l'intérieur et vers le bas, symétriquement, et des galets (10) ou patins.

10. Suspension selon l'une des revendications précédentes, caractérisée en ce que les voies de roulement (6) ou voies de glissement présentent, relativement à l'élément porteur qui les porte (traverse 5 ou distributeur 7 et éventuellement poutre intermédiaire 11), au moins en leur région moyenne recevant le galet (10) adjoint ou le patin adjoint dans la position initiale correspondante, une inclinaison ($\alpha$, $\beta$) de 60° ± 15°.

11. Suspension selon l'une des revendications précédentes, caractérisée en ce que la traverse (5) est fixée de façon réglable en hauteur à un montant (3) du châssis (2).

Fig.1b

Fig.1

0 100 342

Fig.1a

Fig.2

Fig.2b

Fig. 2a

Fig. 3

Fig. 3a

# Fig.4

0 100 342

Fig.5

0 100 342

Fig.6

0 100 342

Fig.7

# Fig. 7a

0 100 342

*Fig.8*

0 100 342